# EUROPEAN PATENT SPECIFICATION

(11) **EP 2 809 572 B1**
(45) Date of publication and mention of the grant of the patent: **04.05.2016**
(21) Application number: 13705024.1
(22) Date of filing: 29.01.2013
(51) Int. Cl.: B63B 25/02, B63B 27/25, B03B 5/68, B03B 5/16

(54) **LOADING SPACE AND METHOD OF LOADING SUCH A LOADING SPACE WITH SLURRY**
LADERAUM UND VERFAHREN ZUM LADEN EINES SOLCHEN LADERÄUM MIT GÜLLE
ESPACE DE CHARGEMENT ET PROCÉDÉ DE CHARGEMENT D'UN TEL ESPACE DE CHARGEMENT AVEC BOUE

(30) Priority: 01.02.2012 NL 2008214
(43) Date of publication of application: 10.12.2014
(73) Proprietor: IHC Holland IE B.V., 3361 EP Sliedrecht (NL)
(72) Inventor: STAM, Nijs, NL-3328 EM Dordrecht (NL); VAN DER BLOM, Erik Christiaan, NL-3232 PR Brielle (NL)
(74) Representative: Nederlandsch Octrooibureau
(86) International application number: PCT/NL2013/050047
(87) International publication number: WO 2013/115642

(56) References cited:
- WO-A1-96/30727
- JP-A- 57 209 485
- JP-A- 2004 261 761
- US-A- 3 606 036

## Description

### TECHNICAL FIELD

The invention relates to a method of loading a loading space of a vessel with dredging materials, wherein the method comprises loading a slurry comprising dredging materials and water into the loading space. The invention further relates to a loading space of a vessel suitable for holding a mixture of dredging materials and water and to such a vessel.

### BACKGROUND

Dredging operations are performed to maintain the depth of and deepen shipping channels, to dredge new shipping channels and for sand and gravel extraction, for example for infrastructure projects and land reclamation. Depending on the type of work and location, widely differing dredging materials are dredged: sludge, clay, fine sand, coarse sand, gravel, rock and often a combination thereof.

During a dredging operation, the dredging material may be fed into a loading space, also referred to as a bin or a hopper, of a vessel such as a dredger or a trailing suction hopper dredger. The dredging materials are mixed with water to be able to pump the dredging materials towards and into the loading space. Such a mixture is also referred to as slurry.

Dredging may be done using a suitable dredging vessel, such as a trailing suction hopper dredger (TSHD) or a cutter suction dredger (CSD). Such vessels comprise suitable propulsion means.

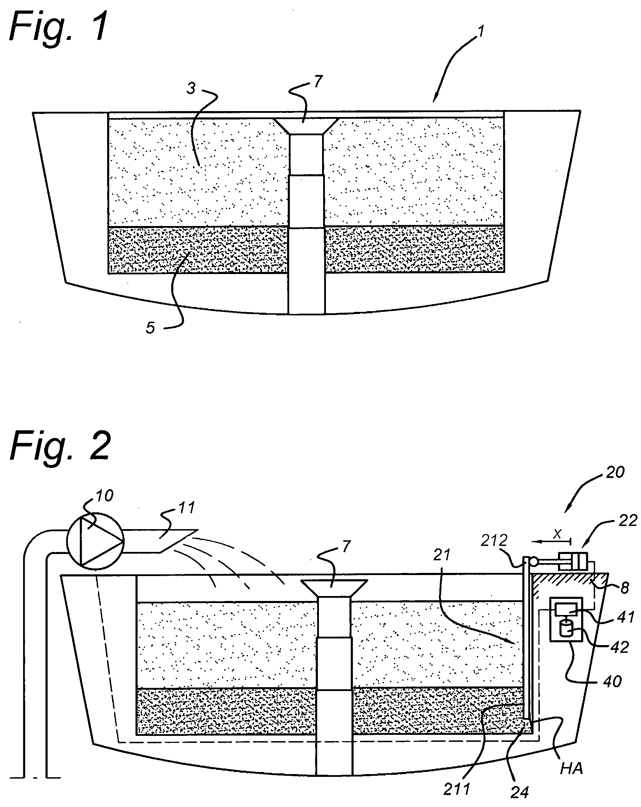

The dredging cycle starts with an empty loading space 1, as schematically shown in Fig. 1, which is typically loaded in about 1 to 2 hours. A mixture of dredging materials and water is pumped into the loading space 1. Such a mixture may have a density of 1200 - 1700 kg/m³.

During the dredging operation, the level of the mixture in the loading space 1 rises, while the dredging materials settle, i.e. sink to the bottom of the loading space 1. Especially fine materials, such as fine sand, need time to settle.

The settled part is referred to as the sand bed or settled bed 5 (settled sand). The unsettled mixture above it is referred to as the mixture soup 3. If the maximum loading space level is reached, the top layer of the mixture soup 3 is fed outwards via a so-called overflow 7 and loading can continue for a further period (this situation is not shown in Fig. 1). Dredging may be continue until the density ρₘ of the mixture soup 3 which flows away through the overflow is so high that it is no longer efficient to continue loading.

The more unsettled materials are comprised in the overflow, the less efficient the dredging and loading process. So, this forms an incentive to create a clean as possible overflow.

In some areas, overflow is not permitted due to environmental regulations as the unsettled materials which are present in the overflow pollute the top layers of the water. So, this forms another incentive to create a clean overflow, as this may help to get permission to overflow in such areas, as a clean overflow will not or not significantly pollute the top layers of the water.

The loading space 1 may comprise means to unload the loading space 1, such as doors in the bottom of the loading space 1 which may be opened to unload the dredged material or a pump and a rainbow installation to rainbow the dredged material out of the loading space 1. These unloading means are not shown in the Figures.

It is important that the dredging operation is as efficient as possible. If the loading space 1 is filled too quickly, the overflow will comprise relatively large amounts of dredging materials. Filling which is too slow is not attractive from a cost perspective. JP2004261761 describes a slurry treatment system which performs solid-liquid Closest prior art document separation of slurry in a transport passage of the slurry. The system comprises a reflection plate and an ultrasonic vibrator for standing wave formation and is activated and stopped at prescribed cyclic intervals by starting and stopping the irradiation with an ultrasonic wave. The system is installed in a transport passage of the slurry. This makes it a difficult system to install. Also, slurry treatment can only be applied during a relatively short period of time, i.e. only when the slurry passes the reflection plate.

US3,606,036 describes to pump slurry into a vessel. The slurry is permitted to settle yielding an upper fraction or layer of essentially clear, excess water overlying a settled, more concentrated fraction of solids. In order to promote the densification and settling of the slurry, sonic vibrations can be applied and the frequency of such vibrations is preferably adjusted to promote the rate of settling.

WO96/30727A1 describes a method and system of promoting discharge of essentially non-flowing material through a bottom opening of a container, such as a storage bin or hopper. It is noted that it may be difficult to unload the material from the hopper as when a gate at a bottom opening is opened the material may not flow through the opening but will "hang-up" within the hopper, bridging or arching across the bottom opening. According to this document, in order to dislodge the material and cause it to substantially "flow" through the hopper bottom opening, a movable panel is located adjacent to the opening, at the deepest region within the hopper where the material is most compact. The movable panel has a free end which is pivotable about a fixed upper end of the panel where it is rotatably connected via an elongated horizontally extending hinge. Its angular disposition and intended movement against and away from the underside of the mass will create an unstable condition within the material which will cause it to break off and tumble under its own weight, falling through the opening. The repeated, slow manoeuvring of the panel, first upwardly and then downwardly, sequentially recreates such instability within the material, causing successive, comparatively small lumps of it to break off frequently, thereby promoting flow through hopper opening. This document thus relates to the unloading of essentially non-flowing materials.

DE3409205 describes to vibrate a container to enhance separation of a two-phase mixture of liquid and solids. WO2009144031A2 describes a method and apparatus to move particles in a fluid by moving a container comprising the fluid and the particles.

### SUMMARY

It is an object of the invention as defined by independent claims 1 and 10 to provide a method of loading a loading space with dredged materials and such a loading space which can be loaded more efficiently.

Therefore, according to a first aspect a method of loading a loading space of a vessel with dredging materials is provided, wherein the method comprises
a) loading a slurry comprising dredging materials and water into the loading space, and
b) generating at least one pressure wave through the slurry inside the loading space to enhance the formation of a settled bed of the dredging materials.

The actions a) and b) may be performed simultaneously or alternately, i.e. the pressure waves may be generated while the loading of the mixture is finished or temporally interrupted. This will be described in more detail below.

The dredging materials are allowed to settle, i.e. sink to the bottom of the loading space to form a settled bed. By applying a pressure wave the settling process is accelerated, which results in more time and cost efficient loading and a cleaner overflow. This is advantageous from a cost-perspective as the dredging and loading can be performed more efficiently. Also, the overflow will be cleaner, contributing to the sustainability of the dredging process.

According to an embodiment the pressure wave is generated by actuating a member which is movable arranged in the loading space. This is an advantageous way of generating a pressure wave inside the loading space.

According to an embodiment the at least one pressure wave is generated by actuating a member which is movable arranged in the loading space to perform a reciprocating motion, wherein movement in a first direction is performed at least five times faster than movement in a second direction, the second direction being opposite the first direction.

The movement of the member inside the loading space may be given by a curve which has a saw tooth shape in a movement vs. time diagram, wherein a first slope of the saw tooth associated with the movement in the first direction is at least five times higher than a second slope of the saw tooth associated with the movement in the second direction. The second slope is of course of an opposite sign than the first slope.

In fact, the movement in the first direction may be applied as fast as possible, for instance within 200 ms. The movement in the second direction may take 1s, or longer, such as for instance 10s or 20s.

The length of the stroke, the amount of force applied, the speed of movement during movement in the second direction may be varied and set depending on the circumstances, such as type of dredging materials (size of grains of sand), size of the loading space. For instance, the length of the stroke may be in the range of 1 - 500 mm, for instance in the range of 250 - 300 mm.

According to an embodiment a plurality of pressure waves are generated with a frequency of less than 0,2 Hz. It has been found that frequencies of less than 0,2 Hz are advantageous. Such a frequency is low enough to give the mixture soup enough time to settle in between subsequent pressure waves.

According to an embodiment the pressure waves are generated by actuating a member which is movable arranged in the loading space in a reciprocating motion, wherein subsequent reciprocating motions are alternated with periods of non-motion.

In between the reciprocating motions, periods of non-motion of the member may be applied, in which the mixture soup is not-disturbed and settlement is thus enhanced. The pressure wave may for instance be generated using available underwater wave generators, such as known from swimming pools with wave generators.

According to an embodiment the loading space comprises a vertically orientated plate and an actuator, wherein the plate is hingeably mounted to the inside of the loading space along a hinge axis along a lower edge of the plate and wherein the actuator is mounted to push and pull the plate at a position remote from the hinge axis to generate the at least one pressure wave through the slurry inside the loading space. Such an arrangement is a relatively easy and reliable way of providing a member inside the loading space to generate pressure waves. The actuator may be a hydraulic cylinder, hydraulic ram or any other suitable actuator. The actuator may also be formed by a number of parallel hydraulic cylinders, hydraulic rams or a number of other suitable parallel actuators.

The plate may be positioned inside the loading space parallel to a substantially vertical side wall of the loading space. Alternatively, the plate may constitute a side wall of the loading space.

The actuator may cause the plate to rotate about the hinge axis. Of course, in case lower part of the plate is already in the settled bed, only the part of the plate above the settled bed will substantially move, as the lower part of the plate is fixed in position by the settled bed.

The plate may be mounted to the inside of the loading space by a flexible connection member, such as a rubber strip which is along a first longitudinal edge attached to a side wall of the loading and along a second longitudinal edge, opposite the first longitudinal edge, attached to the plate to form a flexible connection which serves as hinge axis.

The plate may at least partially protrude above the loading space. The actuator may be mounted outside the loading space, for instance on deck of the vessel, and may be connected to part of the plate which protrudes above the loading space.

According to an embodiment the plate is a fibre enforced plate. The fibres may be orientated parallel to each other in such a way that the plate has elastic properties in the vertical direction, allowing the plate to bend to overcome stress that may be induced in the plate when actuated while a lower part of the plate is already in the settled bed.

In general, the plate may be a flexible plate.

According to an embodiment the plate is formed by a frame of spring steel strips in which a number of partially overlapping plate parts are mounted. This way, the plate may be made flexible.

According to an embodiment the pressure wave is generated to travel through the loading space in a substantial horizontal direction. It has been found that pressure waves in the horizontal direction are most effective in enhancing the settling process. Also, pressure waves in this direction reduce the risk of disturbing the settled bed and causing the settled bed to unsettle by applying vertical motion to the settled particles.

The term horizontal as used in this context refers to a direction which is in a plane defined by the lateral or pitch axis of the vessel and the longitudinal or roll axis of the vessel. The lateral axis passes through the vessel from a pilot's left to right. The longitudinal axis passes through the vessel from tail to nose. In other words, the horizontal direction may deviate from a true horizontal direction due to vessel motion on the water (waves).

The member which is positioned in the loading space may thus be actuated in a horizontal direction in order to generate the horizontal pressure waves.

According to an embodiment action a) is finished or temporally interrupted when performing action b). According to this embodiment the at least one pressure wave is generated when no slurry is loaded into the loading space. By (temporally) interrupting the loading, the slurry already present in the loading space, especially the mixture soup, is no longer disturbed and moved by the incoming slurry, which contributes to efficient settling. The loading may be interrupted temporally, i.e. the loading may be resumed after the interruption. The periods of loading and interruption may be sequentially repeated until the loading space is filled. Alternatively, only one period of loading may be executed, followed by a period of non-loading, during which at least one pressure wave is generated.

Of course, pressure waves may also be applied during loading of slurry.

According to an embodiment action a) is resumed after a period of interruption. When the dredging materials are allowed to settle, the loading may be resumed. The overflow which may be caused by the additional loading will be relatively clean due to the period of interruption during which the at least one pressure wave was generated. In case the overflow is an overflow of which the height can be adjusted, such as a telescopic overflow, in between action b) and resuming action a), the overflow may be lowered to generate an overflow and raised again.

According to an embodiment the loading space is divided in a plurality of sub-spaces, and the method comprises
a') loading a mixture of dredging materials and water into a first sub-space, and subsequently
a") loading a mixture of dredging materials and water into a second sub-space while
b') generating at least one pressure wave through the slurry inside the first sub-space to enhance the formation of a settled bed of the dredging materials.

Such an embodiment has the advantage that loading may continue without interruptions, while the slurry is at the same time allowed to settle.

According to an aspect there is provided a loading space of a vessel suitable for holding a mixture of dredging materials and water, wherein the loading space comprises pressure wave generating means arranged to generate at least one pressure wave through the slurry inside the loading space to enhance the formation of a settled bed of the dredging materials.

According to an embodiment the pressure wave generating means comprise a member which is movable arranged in the loading space and an actuator for moving the member.

According to an embodiment the actuator is arranged to move the member to perform a reciprocating motion, wherein movement in a first direction is performed at least five times faster than movement in a second direction, the second direction being opposite the first direction. In fact, movement in the first direction may be applied as fast as possible. The actuator may therefore be a hydraulic ram or the like.

According to an embodiment the loading space comprises a control unit arranged to control the actuator to generate a plurality of pressure waves with a frequency of less than 0,2 Hz.

According to an embodiment the loading space comprises a control unit arranged to control the actuator to generate pressure waves, wherein subsequent pressure waves are alternated with periods of non-motion.

According to an embodiment the pressure wave generating means comprises a vertically orientated plate and an actuator, wherein the plate is hingeably mounted to the inside of the loading space along a hinge axis along a lower edge of the plate and wherein the actuator is mounted to push and pull the plate at a position remote from the hinge axis to generate the at least one pressure wave through the slurry inside the loading space.

According to an embodiment the plate is a fibre enforced plate.

According to an embodiment the plate is formed by a frame of spring steel strips in which a number of partially overlapping plate parts are mounted.

According to an embodiment the pressure wave generating means are arranged to generated pressure waves which travel through the loading space in a substantial horizontal direction.

According to an embodiment the loading space comprises a control unit arranged to control the pressure wave generating means to generate pressure waves when loading slurry into the loading space is finished or temporally interrupted.

According to an embodiment the control unit is arranged to resume loading after a period of interruption. When loading is resumed, the pressure wave generating means may be stopped by the control unit.

According to an embodiment the loading space is divided in a plurality of sub-spaces, and the control unit is arranged to
a') control loading means to load a slurry of dredging materials and water into a first sub-space,
   and subsequently
a") control the loading means to load a slurry of dredging materials and water into a second sub-space while
b') controlling the pressure wave generating means to generate at least one pressure wave through the slurry inside the first sub-space to enhance the formation of a settled bed of the dredging materials.

According to a further aspect there is provided a vessel comprising a loading space as described above.

### BRIEF DESCRIPTION OF THE DRAWINGS

Embodiments will now be described, by way of example only, with reference to the accompanying schematic drawings in which corresponding reference symbols indicate corresponding parts, and in which:
FIG. 1 schematically shows a loading space according to the prior art,
FIG. 2 schematically shows a loading space according to an embodiment,
FIG. 3 schematically shows a flexible member according to an embodiment,
FIG. 4 schematically shows a movement vs. time diagram of such a member according to an embodiment,
FIG. 5 schematically shows a loading space according to an alternative embodiment.

The figures are meant for illustrative purposes only, and do not serve as restriction of the scope or the protection as laid down by the claims.

### DETAILED DESCRIPTION

As described above, Fig. 1 shows a loading space 1, for instance of a trailing suction hopper dredger (TSHD) or a cutter suction dredger (CSD).

Fig. 2 shows a loading space 1 according to an embodiment. Also shown are loading means, here represented by a pump 10 with a discharge conduit 11 provided to pump slurry into the loading space 1, indicated by the dashed arrow. The pump 10 may be provided on the deck of the vessel or on any other suitable location. The loading means 10 may of course comprise further equipment, such as dredging equipment, not shown in the figures.

During the dredging operation, the level of the mixture in the loading space 1 rises, while the dredging materials settle, i.e. sink to the bottom of the loading space 1. The settled part is referred to as the sand bed or settled bed 5 (settled sand). The unsettled mixture above it is referred to as the mixture soup 3. If the maximum loading space level is reached, the top layer of the mixture soup 3 is fed outwards via a so-called overflow 7 and loading can continue for a further period (this situation is not shown in Fig. 2).

The loading space 1 further comprises pressure wave generating means 20 for generating pressure waves through the slurry in the loading space 1, especially through the mixture soup 3. This is done because pressure waves accelerate the settling of the dredging materials and thus promotes growth of the settled bed 5.

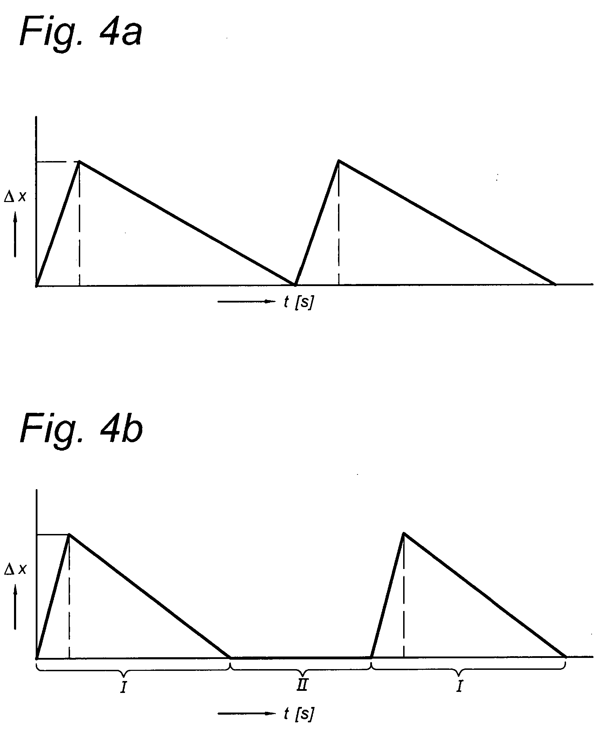

The pressure wave generating means 20 comprise a moveable member 21 which is moveable and positioned at least partially inside the loading space 1. The pressure wave generating means 20 further comprise an actuator 22 arranged to move the moveable member 21 to generate the pressure waves. The actuator 22 may be a hydraulic cylinder or an hydraulic ram arranged to move the moveable member 21 in a substantially horizontal reciprocating manner. The reciprocating movement may be a movement comprising movement in a first direction with a velocity which is at least five time greater than the reciprocating movement in the opposite, second direction. This is explained in more detail below with reference to Fig. 4. As shown, the actuator 22 may comprise a cylinder with a piston moveable positioned inside the cylinder. The actuator 22 is driven or energized by a hydraulic system, which is not shown in the Figures. It will be understood that alternative actuators 22 can be used instead.

The actuator 22 may be connected to a part of the moveable member 21 which protrudes above the loading space 1, such that the actuator 22 may be positioned outside the loading space 1, for instance on the deck 8 of the vessel.

The moveable member 21 may be a plate 21 which is positioned parallel to a side wall of the loading space 1 and has substantially the same dimensions as that side wall of the loading space 1. In that case, the actuator 22 may be with one end connected to an upper edge of the wall 212 protruding above the loading space 1. A lower edge 211 of the plate 21 is hingeably connected to the side wall of the loading space 1, for instance by way of a flexible connection member 24, such as a rubber strip.

The moveable member 21 may be flexible, for instance a flexible plate, to prevent breakage of the moveable member 21 when part of the moveable member 21 is fixed by the rising settled bed 5 and can thus not move. The moveable member 21 may be made of a fibre enforced material to provide flexibility and strength.

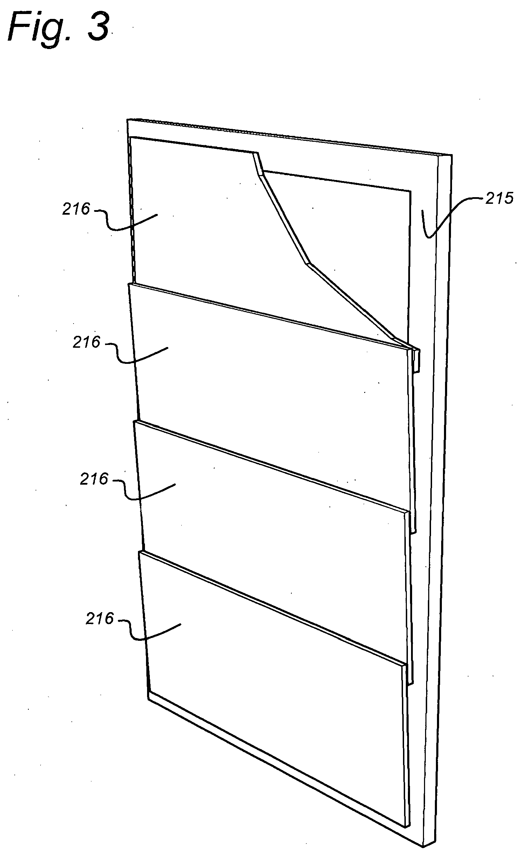

Fig. 3 shows an alternative embodiment in which the plate 21 is made of a frame of flexible spring steel strips 215 in which a number of partially overlapping plate parts 216 are mounted. When the plate 21 bends, the frame bends, while the plate parts 216 slide over each other.

A control unit 40 may be provided to control the pressure generating means 20. The control unit 40 may be formed as a computer and may comprise a central processing unit 41 and a memory 42 which are capable of communicating with each other (both not shown), the memory 42 comprising programming lines or instructions which can be read and executed by the central processing unit 41 to provide the control unit 40 with the functionality as described. The functionality of the control unit 40 may also be embedded in suitable hardware circuitry.

The control unit 40 may be arranged to control the frequency, the length of the stroke and the velocities in the first and second directions of the actuator 22.

Examples of a reciprocating motions are schematically shown in Fig.'s 4a - b, showing diagrams in which movement of the actuator 22 is shown as a function of time. Fig. 4a shows a saw tooth function in which movement in the first direction is substantially, at least five times, faster/shorter than movement in the second, opposite direction.

The control unit 40 may control the loading means and the pressure wave generation means 20 to perform the following actions:
a) loading a slurry comprising dredging materials and water into the loading space 1, and
b) generating at least one pressure wave through the slurry inside the loading space 1 to enhance the formation of a settled bed 5 of the dredging materials.

Action b) may be performed during action a), however, according to an embodiment, action b) is at least partially performed while action a) is stopped or interrupted. Action b) may comprise generating pressure waves as shown in Fig. 4a.

During action b), the control unit 40 may control the actuator 22 to alternately go through periods of pressure generation (I) and idle periods (II). An example of such an embodiment is shown in Fig. 4b.

During the periods of pressure generation (I) one or more reciprocating motions (only one is shown in Fig. 4b) may be performed. In other words, the pressure generating means 20 may be controlled to generate one or more pressure waves, followed by an idle period (II) in which no pressure wave(s) is/are generated, followed by a new period of pressure generation (I) in which one or more new pressure wave(s) is/are generated, etc.

The control unit 40 may also be arranged to control the loading means to stop or interrupt loading during action b) in order to reduce the kinematic disturbance of the mixture soup 3 to create optimal conditions for the settling process.

Also, the control unit 40 may control the loading means to load another loading space 1 or another sub-space of the loading space during action b).

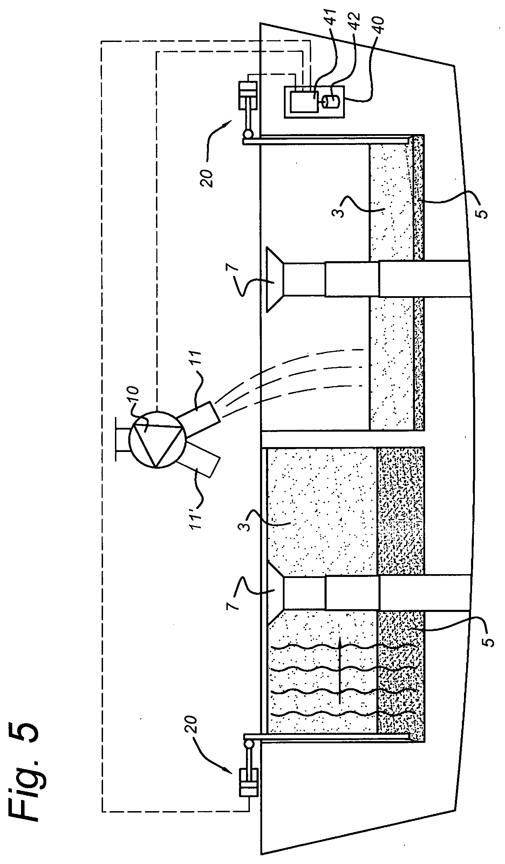

Fig. 5 shows an alternative embodiment in which the loading space 1 comprises a plurality of sub-spaces 1', 1", each having a (telescopic) overflow 7. The control unit 40 may be arranged to control the loading means to load slurry into the first or second sub-space 1', 1" via a first and second discharge conduit 11', 11".

The control unit 40 may be arranged to control the loading means to load slurry into the second sub-space 1" while action b) is performed with respect to first sub-space 1'. This way, loading can be done even more efficiently. It will be understood that more than two sub-spaces (as shown in Fig. 5) may be provided. The different sub-spaces 1', 1" may be loaded one after the other, such that no overflow is generated, while pressure waves are generated (i.e. action b) is applied) to the sub-spaces already loaded. After the last sub-space is loaded, the loading means 10 may be controlled by the control unit 40 to continue performing action a) (loading) with respect to the first sub-space 1', causing overflow which is now relatively clean as the settled bed 5 has been given time to form enhanced by the generated pressure waves. Continued loading may be continued for the first sub-space 1' until the density of the overflow reaches a predetermined level. Then, the next sub-spaces may be loaded one after the other. This process may be repeated several times.

As mentioned above, the overflow 7 may be a telescopic overflow of which the height can be adjusted. In order to create an even cleaner overflow, after performing action b) and before resuming performing action a) with respect to a specific a loading space 1 or sub-space 1'. 1", the telescopic overflow 7 may be lowered in order to overflow the relatively clean top layer of the mixture soup 3. The overflow 7 is then again raised before action a) is resumed for the specific loading space 1/sub-space 1', 1". Again, this process may be repeated several times.

In case the loading space 1 is provided with doors in the bottom of the loading space 1, the sub-spaces 1', 1" are preferably not smaller than the size of one such door. On the other hand, the loading space 1 or the sub-spaces 1', 1" may not be too large, as the pressure wave preferably reaches the other side of the loading space 1 or sub-space 1', 1".

The embodiments make it possible to create a relatively clean overflow, for instance an overflow with a density of ρ - 1050 kg/m3 or even 1020 kg/m3 even in a situation wherein the settled bed is relatively high, i.e. close to the height of the overflow 7. This is an improved with respect to an overflow having a density close to the density of the slurry being pumped into the loading space 1, which may be in the range of 1200 - 1700 kg/m3.

The descriptions above are intended to be illustrative, not limiting. It will be apparent to the person skilled in the art that alternative and equivalent embodiments of the invention can be conceived and reduced to practice, without departing from the scope of the claims set out below.

## Claims

1. Method of loading a loading space (1) of a vessel with dredging materials, wherein the method comprises
a) loading a slurry comprising dredging materials and water into the loading space (1), and
b) generating at least one pressure wave through the slurry inside the loading space (1) to enhance the formation of a settled bed (5) of the dredging materials, wherein the at least one pressure wave is generated by actuating a member (21) which is movably arranged in the loading space (1) to perform a reciprocating motion, wherein movement in a first direction is performed at least five times faster than movement in a second direction, the second direction being opposite the first direction.

2. Method according to claim 1, wherein a plurality of pressure waves are generated with a frequency of less than 0,2 Hz.

3. Method according to any one of the preceding claims, wherein the pressure waves are generated by actuating a member (21) which is movable arranged in the loading space (1) in a reciprocating motion, wherein subsequent reciprocating motions are alternated with periods of non-motion.

4. Method according to claim 3, wherein the loading space (1) comprises a vertically orientated plate (21) and an actuator (22), wherein the plate (21) is hingeably mounted to the inside of the loading space (1) along a hinge axis (HA) along a lower edge of the plate (211) and wherein the actuator (22) is mounted to push and pull the plate (21) at a position (212) remote from the hinge axis (HA) to generate the at least one pressure wave through the slurry inside the loading space (1).

5. Method according to claim 4, wherein the plate (21) is a fibre enforced plate.

6. Method according to any one of the claims 4 -5, wherein the plate (21) is formed by a frame (215) of spring steel strips in which a number of partially overlapping plate parts (216) are mounted.

7. Method according to any one of the preceding claims, wherein action a) is finished or temporally interrupted when performing action b).

8. Method according to claim 7, wherein action a) is resumed after a period of interruption.

9. Method according to any one of the preceding claims, wherein the loading space (1) is divided in a plurality of sub-spaces, and the method comprises
a') loading a mixture of dredging materials and water into a first sub-space (1'), and subsequently
a") loading a mixture of dredging materials and water into a second sub-space (1") while
b') generating at least one pressure wave through the slurry inside the first sub-space (1') to enhance the formation of a settled bed (5) of the dredging materials.

10. Loading space (1) of a vessel suitable for holding a mixture of dredging materials and water, wherein the loading space (1) comprises pressure wave generating means (20) arranged to generate at least one pressure wave through the slurry inside the loading space (1) to enhance the formation of a settled bed (5) of the dredging materials, wherein the pressure wave generating means (20) comprise a member (21) which is movably arranged in the loading space (1) and an actuator (22) for moving the member (21), and wherein the actuator (22) is arranged to move the member (21) to perform a reciprocating motion, **characterized in that** the movement in a first direction is performed at least five times faster than movement in a second direction, the second direction being opposite the first direction.

11. Loading space (1) according to claim 10, comprising a control unit (40) arranged to control the actuator (22) to generate a plurality of pressure waves with a frequency of less than 0,2 Hz.

12. Loading space (1) according to any one of the claims 10 - 11, comprising a control unit (40) arranged to control the actuator (22) to generate pressure waves, wherein subsequent pressure waves are alternated with periods of non-motion.

13. Loading space (1) according to any one of the claims 10 - 12, wherein the pressure wave generating means (20) comprises a vertically orientated plate (21) and an actuator (22), wherein the plate (21) is hingeably mounted to the inside of the loading space (1) along a hinge axis (HA) along a lower edge (211) of the plate (21) and wherein the actuator (22) is mounted to push and pull the plate (21) at a position (212) remote from the hinge axis (HA) to generate the at least one pressure wave through the slurry inside the loading space (1).

14. Loading space (1) according to claim 13, wherein the plate (21) is a fibre enforced plate.

15. Loading space (1) according to claim 13, wherein the plate (21) is formed by a frame (215) of spring steel strips in which a number of partially overlapping plate parts (216) are mounted.

16. Loading space (1) according to any one of the claims 10 - 15, wherein the pressure wave generating means (20) are arranged to generated pressure waves which travel through the loading space (1) in a substantial horizontal direction.

17. Loading space (1) according to any one of the claims 10 - 16, comprising a control unit (40) arranged to control the pressure wave generating means (20) to generate pressure waves when loading slurry into the loading space (1) is finished or temporally interrupted.

18. Loading space (1) according to any one of the claims 10 - 17, wherein the loading space (1) is divided in a plurality of sub-spaces (1', 1"), and the control unit (40) is arranged to
a') control loading means (10) to load a slurry of dredging materials and water into a first sub-space (1'),
and subsequently
a") control the loading means (10) to load a slurry of dredging materials and water into a second sub-space (1") while
b') controlling the pressure wave generating means (20) to generate at least one pressure wave through the slurry inside the first sub-space (1') to enhance the formation of a settled bed (5) of the dredging materials.

## Patentansprüche

1. Verfahren zum Beladen eines Laderaums (1) eines Schiffes mit Ausbaggerungsmaterialien, wobei das Verfahren umfasst:
a) Laden eines Schlammes, der Ausbaggerungsmaterialien und Wasser umfasst, in den Laderaum (1)
und
b) Erzeugen zumindest einer Druckwelle durch den Schlamm in dem Laderaum (1), um die Bildung einer festen Schicht (5) aus den Ausbaggerungsmaterialien zu verbessern, wobei die zumindest eine Druckwelle durch Betätigen eines Teiles (21) erzeugt wird, welches in dem Laderaum (1) beweglich angeordnet ist, um eine hin- und hergehende Bewegung auszuführen, wobei die Bewegung in einer ersten Richtung zumindest fünfmal schneller ausgeführt wird als die Bewegung in einer zweiten Richtung, die der ersten Richtung entgegengerichtet ist.

2. Verfahren nach Anspruch 1, wobei eine Vielzahl von Druckwellen mit einer Frequenz von weniger als 0,2Hz erzeugt wird.

3. Verfahren nach einem der vorhergehenden Ansprüche, wobei die Druckwellen durch Betätigen eines in dem Laderaum (1) beweglich angeordneten Teiles (21) in einer hin- und hergehenden Bewegung erzeugt werden, wobei nachfolgende hin- und hergehende Bewegungen mit Perioden einer Nichtbewegung abgewechselt werden.

4. Verfahren nach Anspruch 3, wobei der Laderaum (1) eine vertikal ausgerichtete Platte (21) und eine Betätigungseinrichtung (22) umfasst, wobei die Platte (21) in der Innenseite des Laderaums (1) längs einer Gelenkachse (HA) entlang einer unteren Plattenkante (211) gelenkig angebracht ist und wobei die Betätigungseinrichtung (22) angebracht ist, um die Platte (21) an einer von der Gelenkachse (HA) entfernt liegenden Stelle (212) zur Erzeugung der zumindest einen Druckwelle durch den Schlamm in dem Laderaum (1) zu ziehen und zu drücken.

5. Verfahren nach Anspruch 4, wobei die Platte (21) eine faserverstärkte Platte ist.

6. Verfahren nach einem der Ansprüche 4 bis 5, wobei die Platte (21) durch ein Gestell (215) aus Federstahlstreifen gebildet ist, in welchem eine Anzahl von sich teilweise überlappenden Plattenteilen (216) angebracht ist.

7. Verfahren nach einem der vorhergehenden Ansprüche, wobei der Vorgang a) beendet oder temporär unterbrochen wird, wenn der Vorgang b) ausgeführt wird.

8. Verfahren nach Anspruch 7, wobei der Vorgang a) nach einer Unterbrechungszeitspanne fortgesetzt wird.

9. Verfahren nach einem der vorhergehenden Ansprüche, wobei der Laderaum (1) in eine Vielzahl von Unterräumen unterteilt ist und wobei das Verfahren umfasst a') Laden eines Gemisches aus Ausbaggerungsmaterialien und Wasser in einen ersten Unterraum (1')
und anschließendes
a") Laden eines Gemisches aus Ausbaggerungsmaterialien und Wasser in einen zweiten Unterraum (1"),
während
b') zumindest eine Druckwelle durch den Schlamm in dem ersten Unterraum (1') erzeugt wird, um die Bildung einer festen Schicht (5) aus den Ausbaggerungsmaterialien zu verbessern.

10. Laderaum (1) eines Schiffes, der geeignet ist zur Aufnahme eines Gemisches aus Ausbaggerungsmaterialien und Wasser, wobei der Laderaum (1) eine Druckwellen-Erzeugungseinrichtung (20) umfasst, die zur Erzeugung zumindest einer Druckwelle durch den Schlamm innerhalb des Laderaumes (1) ausgelegt ist, um die Bildung einer festen Schicht (5) aus den Ausbaggerungsmaterialien zu verbessern, wobei die Druckwellen-Erzeugungseinrichtung (20) ein Teil (21), welches in dem Laderaum (1) beweglich angeordnet ist, und eine Betätigungseinrichtung (22) zur Bewegung des Teiles (21) umfasst
und wobei die Betätigungseinrichtung (22) zur Bewegung des Teiles (21) angeordnet ist, um eine hin- und hergehende Bewegung auszuführen,
**dadurch gekennzeichnet, dass** die Bewegung in einer ersten Richtung zumindest fünfmal schneller ausgeführt wird als die Bewegung in einer zweiten Richtung, die der ersten Richtung entgegengerichtet ist.

11. Laderaum (1) nach Anspruch 10, umfassend eine Steuereinheit (40), die ausgelegt ist, um die Betätigungseinrichtung (22) zur Erzeugung einer Vielzahl von Druckwellen mit einer Frequenz von weniger als 0,2Hz zu steuern.

12. Laderaum (1) nach einem der Ansprüche 10 bis 11, umfassend eine Steuereinheit (40), die ausgelegt ist, um die Betätigungseinrichtung (22) zur Erzeugung von Druckwellen zu steuern, wobei nachfolgende Druckwellen mit Perioden einer Nichtbewegung abgewechselt werden.

13. Laderaum (1) nach einem der Ansprüche 10 bis 12, wobei die Druckwellen-Erzeugungseinrichtung (20) eine vertikal ausgerichtete Platte (21) und eine Betätigungseinrichtung (22) umfasst,
wobei die Platte (21) in der Innenseite des Laderaums (1) längs einer Gelenkachse (HA) entlang einer unteren Kante (211) der Platte (21) gelenkig angebracht ist und wobei die Betätigungseinrichtung (22) angebracht ist, um die Platte (21) zur Erzeugung der zumindest einen Druckwelle durch den Schlamm in dem Laderaum (1) an einer von der Gelenkachse (HA) entfernt liegenden Stelle (212) zu drücken und zu ziehen.

14. Laderaum (1) nach Anspruch 13, wobei die Platte (21) eine faserverstärkte Platte ist.

15. Laderaum (1) nach Anspruch 13, wobei die Platte (21) durch ein Gestell (215) aus Federstahlstreifen gebildet ist, in welchem eine Anzahl von sich teilweise überlappenden Plattenteilen (216) angebracht ist.

16. Laderaum (1) nach einem der Ansprüche 10 bis 15, wobei die Druckwellen-Erzeugungseinrichtung (20) ausgelegt ist, um Druckwellen zu erzeugen, die sich durch den Laderaum (1) in einer im Wesentlichen horizontalen Richtung bewegen.

17. Laderaum (1) nach einem der Ansprüche 10 bis 16, umfassend eine Steuereinheit (40), die ausgelegt ist, um die Druckwellen-Erzeugungseinrichtung (20) zur Erzeugung von Druckwellen zu steuern, wenn das Laden von Schlamm in den Laderaum (1) beendet oder temporär unterbrochen ist.

18. Laderaum (1) nach einem der Ansprüche 10 bis 17, wobei der Laderaum (1) in eine Vielzahl von Unterräumen (1', 1 ") unterteilt ist und wobei die Steuereinheit (40) ausgelegt ist,
a') um die Ladeeinrichtung (10) zum Laden eines Schlammes aus Ausbaggerungsmaterialien und Wasser in einen ersten Unterraum (1') zu steuern und um
anschließend
a") die Ladeeinrichtung (10) zum Laden eines Schlammes aus Ausbaggerungsmaterialien und Wasser in einen zweiten Unterraum (1 ") zu steuern, während
b') die Druckwellen-Erzeugungseinrichtung (20) gesteuert wird, um zumindest eine Druckwelle durch den Schlamm in dem ersten Unterraumes (1') zur Verbesserung der Bildung einer festen Schicht (5) aus den Ausbaggerungsmaterialien zu erzeugen.

## Revendications

1. Procédé de chargement d'un espace de chargement (1) d'un récipient contenant des matériaux de dragage, dans lequel ledit procédé comprend :
a) le chargement d'une boue qui comprend des matériaux de dragage et de l'eau dans l'espace de chargement (1) ;
b) la génération d'au moins une onde de pression à travers la boue à l'intérieur de l'espace de chargement (1) afin d'améliorer la formation d'un lit déposé (5) des matériaux de dragage, dans lequel ladite au moins une onde de pression est générée en actionnant un organe (21) qui est agencé mobile dans l'espace de chargement (1) pour effectuer un mouvement de va-et-vient, dans lequel le déplacement dans une première direction est effectué au moins cinq fois plus rapidement que le déplacement dans une seconde direction, la seconde direction étant opposée à la première direction.

2. Procédé selon la revendication 1, dans lequel une pluralité d'ondes de pression sont générées avec une fréquence inférieure à 0,2 Hz.

3. Procédé selon l'une quelconque des revendications précédentes, dans lequel les ondes de pression sont générées en actionnant un organe (21), qui peut se déplacer et qui est agencé mobile dans l'espace de chargement (1), pour pouvoir effectuer un mouvement de va-et-vient, dans lequel les mouvements de va et vient alternent avec des périodes sans mouvement.

4. Procédé selon la revendication 3, dans lequel l'espace de chargement (1) comprend un plateau (21) orienté verticalement et un actionneur (22), dans lequel le plateau (21) est monté par l'intermédiaire d'une charnière à l'intérieur de l'espace de chargement (1) suivant un axe de charnière (HA) le long d'un bord inférieur (211) du plateau (21) et dans lequel l'actionneur (22) est monté pour tirer et pousser le plateau (21) dans une position (212) éloignée de l'axe de charnière (HA) afin de générer la au moins une onde de pression à travers la boue à l'intérieur de l'espace de chargement (1).

5. Procédé selon la revendication 4, dans lequel le plateau (21) est un plateau renforcé de fibres.

6. Procédé selon l'une quelconque des revendications 4 à 5, dans lequel le plateau (21) est constitué d'un cadre (215) de bandes d'acier à ressort dans lequel sont montées un certain nombre de pièces de plateau (216) qui se chevauchent partiellement.

7. Procédé selon l'une quelconque des revendications précédentes, dans lequel l'action a) est terminée ou temporairement interrompue quand l'action b) est effectuée.

8. Procédé selon la revendication 7, dans lequel l'action a) est reprise après une période d'interruption.

9. Procédé selon l'une quelconque des revendications précédentes, dans lequel l'espace de chargement (1) est divisé en une pluralité de sous-espaces, et le procédé comprend :
a') le chargement d'un mélange de matériaux de dragage et d'eau dans un premier sous-espace (1'),
puis ensuite
a") le chargement d'un mélange de matériaux de dragage et d'eau dans un second sous-espace (1"), tout en
b') générant au moins une onde de pression à travers la boue à l'intérieur du premier sous-espace (1') afin d'améliorer la formation d'un lit déposé (5) des matériaux de dragage.

10. Espace de chargement (1) d'un récipient adapté pour contenir un mélange de matériaux de dragage et d'eau, dans lequel l'espace de chargement (1) comprend un moyen générateur de l'onde de pression (20) agencé de manière à générer au moins une onde de pression à travers la boue à l'intérieur de l'espace de chargement (1) afin d'améliorer la formation d'un lit déposé (5) des matériaux de dragage, dans lequel le moyen générateur de l'onde de pression (20) comprend un organe (21) qui est agencé mobile dans l'espace de chargement (1) et un actionneur (22) pour déplacer l'organe (21), et dans lequel l'actionneur (22) est agencé pour déplacer l'organe (21) en vue d'effectuer un mouvement de va-et-vient, **caractérisé en ce que** le déplacement dans une première direction est effectué au moins cinq fois plus rapidement que le déplacement dans une seconde direction, la seconde direction étant opposée à la première direction.

11. Espace de chargement (1) selon la revendication 10, comprenant une unité de commande (40) agencée de manière à commander à l'actionneur (22) pour générer une pluralité d'ondes de pression avec une fréquence inférieure à 0,2 Hz.

12. Espace de chargement (1) selon l'une quelconque des revendications 10 à 11, comprenant une unité de commande (40) agencée de manière à commander à l'actionneur (22) de générer des ondes de pression, dans lequel les ondes de pression ultérieures alternent avec des périodes sans mouvement.

13. Espace de chargement (1) selon l'une quelconque des revendications 10 à 12, dans lequel le moyen générateur de l'onde de pression (20) comprend un plateau (21) orienté verticalement et un actionneur (22), dans lequel le plateau (21) est monté par l'intermédiaire d'une charnière à l'intérieur de l'espace de chargement (1) suivant un axe de charnière (HA) le long d'un bord inférieur (211) du plateau (21) et dans lequel l'actionneur (22) est monté pour tirer et pousser le plateau (21) dans une position (212) éloignée de l'axe de charnière (HA) en vue de générer la au moins une onde de pression à travers la boue à l'intérieur de l'espace de chargement (1).

14. Espace de chargement (1) selon la revendication 13, dans lequel le plateau (21) est un plateau renforcé de fibres.

15. Espace de chargement (1) selon la revendication 13, dans lequel le plateau (21) est constitué d'un cadre (215) de bandes d'acier à ressort dans lequel sont montées un certain nombre de pièces de plateau (216) qui se chevauchent partiellement.

16. Espace de chargement (1) selon l'une quelconque des revendications 10 à 15, dans lequel le moyen générateur de l'onde de pression (20) est agencé de manière à générer des ondes de pression qui se propagent à travers l'espace de chargement (1) dans une direction sensiblement horizontale.

17. Espace de chargement (1) selon l'une quelconque des revendications 10 à 16, comprenant une unité de commande (40) agencée de manière à commander au moyen générateur de l'onde de pression (20) de générer des ondes de pression lorsque le chargement de la boue dans l'espace de chargement (1) est terminé ou temporairement interrompu.

18. Espace de chargement (1) selon l'une quelconque des revendications 10 à 17, dans lequel l'espace de chargement (1) est divisé en une pluralité de sous-espaces (1, 1'), et l'unité de commande (40) est agencée de manière à
a') commander au moyen de chargement (10) de charger une boue de matériaux de dragage et d'eau dans un premier sous-espace (1'),
puis ensuite
a") commander au moyen de chargement (10) de charger une boue de matériaux de dragage et d'eau dans un second sous-espace (1"), tout en
b') commandant au moyen générateur de l'onde de pression (20) de générer au moins une onde de pression à travers la boue à l'intérieur du premier sous-espace (1') afin d'améliorer la formation d'un lit déposé (5) des matériaux de dragage.
